# EUROPÄISCHE PATENTSCHRIFT

(11) **EP 3 357 800 B1**
(45) Veröffentlichungstag und Bekanntmachung des Hinweises auf die Patenterteilung: **23.12.2020**
(21) Anmeldenummer: 18155579.8
(22) Anmeldetag: 07.02.2018
(51) Int. Cl.: B62D 35/00, B62D 37/02

(54) **KRAFTFAHRZEUG MIT EINER HECKSCHÜRZE**
MOTOR VEHICLE WITH A STERN COVER
VÉHICULE AUTOMOBILE DOTÉ D'UNE JUPE ARRIÈRE

(30) Priorität: 07.02.2017 DE 102017201860
(43) Veröffentlichungstag der Anmeldung: 08.08.2018
(73) Patentinhaber: Bayerische Motoren Werke Aktiengesellschaft, 80809 München (DE)
(72) Erfinder: Galitz, Markus, 81829 München (DE); Huck, Oliver, 84030 Ergolding (DE); Schlemmer, Anna, 84094 Elsendorf (DE); Prof. Dr.Schütz, Thomas, 81539 München (DE); Seitz, Christian, 85774 Unterföhring (DE)

(56) Entgegenhaltungen:
- FR-A1- 2 028 674
- JP-A- 2010 143 522
- US-B1- 6 196 620

## Beschreibung

### TECHNISCHES GEBIET

Die Erfindung betrifft ein Kraftfahrzeug mit einer Heckschürze, deren Kontur mittels einer Luftleiteinrichtung veränderbar ist, gemäß dem Oberbegriff des Patentanspruchs 1. Sie betrifft weiterhin eine Anordnung zur Verwendung in einem solchen Kraftfahrzeug und eine Heckschürze für ein solches Kraftfahrzeug und/oder für eine Anordnung mit einer derartigen Luftleiteinrichtung.

### HINTERGRUND DER ERFINDUNG

Die während der Fahrt eines Kraftfahrzeugs das Kraftfahrzeug umströmende Luft erzeugt am Heck des Kraftfahrzeugs beim Ablösen der Strömung Verwirbelungen, in denen Energie, die vorher vom Antrieb des Fahrzeugs aufgebracht worden ist, in für den Vortrieb nutzlose Bewegungsenergie der umströmenden Luft umgewandelt wird. Aus aerodynamischen, energetischen Gesichtspunkten ist es daher anzustreben, dass sich die das Kraftfahrzeug umströmende Luft energetisch möglichst günstig von der Fahrzeugkontur ablöst. Dazu ist es allgemein bekannt, im hinteren Bereich des Dachs und/oder an der oberen Fahrzeughinterkante Spoiler oder Spoilerlippen vorzusehen, die eine im Wesentlichen energiearme Strömungsablösung in diesem Bereich bewirken. Im unteren Heckbereich des Fahrzeugs hingegen treten noch viele energiereiche Strömungswirbel auf, die nicht nur einen Teil der vom Kraftfahrzeug aufgebrachten Bewegungsenergie verzehren, sondern, die darüber hinaus auch noch eine Verschlechterung des Abtriebs oder einer Erhöhung des Auftriebs am Kraftfahrzeug in dessen Heckbereich bewirken. Es ist zwar allgemein bekannt, bei Renn- und Sportwagen im mittleren Bereich der Heckschürze sogenannte Diffusoren vorzusehen, die den Abtrieb im Bereich der Hinterachse verstärken sollen, um dem Fahrzeug eine verbesserte Straßenlage zu verleihen, doch sind diese Maßnahmen sehr lokal und dienen im Wesentlichen vorwiegend der Verbesserung der Bodenhaftung des Fahrzeugs.

### STAND DER TECHNIK

Aus der FR 2 880 323 A1 ist ein solcher Heckdiffusor bekannt, der aus einer unter dem Fahrzeugheck gelegenen Ruheposition in eine nach unten, zur Fahrbahn hin ausgefahrene Arbeitsstellung verfahrbar ist und der in dieser Arbeitsstellung auch um eine Querachse verschwenkbar ist. Eine derartige Lösung reduziert jedoch die Bodenfreiheit des Kraftfahrzeugs in dessen Heckbereich.

Aus der DE 10 2013 101 296 A1 ist ein Luftflügel bekannt, der in einer Ruhestellung am hinteren unteren Bereich der Heckschürze des Kraftfahrzeugs anliegt und der in einem ersten Schritt aus dieser Ruheposition um eine sich parallel zur Fahrzeugquerachse erstreckende Schwenkachse, die im unteren Bereich des Luftleitflügels vorgesehen ist, von der Heckschürze wegschwenkbar ist. In einem zweiten Schritt kann dieser ausgeschwenkte Luftleitflügel dann nach unten in Richtung zur Fahrbahn hin ausgefahren werden, so dass er sich in dieser Arbeitsposition unterhalb der Heckschürze und von dieser beabstandet befindet. Auch diese Konstruktion senkt die Bodenfreiheit des Fahrzeugs im Heckbereich und reduziert insbesondere dessen hinteren Rampenwinkel.

Eine ähnliche Konstruktion, die einen an der Unterseite der Heckschürze vorgesehenen Luftleitflügel aufweist, ist aus der DE 10 2008 012 238 A1 bekannt. Durch geringfügiges Verfahren des Luftleitflügels wird eine Heckdiffusoranordnung geschaffen, wobei eine translatorische Bewegung des Heckdiffusors von einer Schwenkarm-Kinematik bewirkt wird.

Aus der DE 10 2013 105 842 A1 ist ein Kraftfahrzeug mit einem Heckdiffusor bekannt, der an der Unterseite einer Heckschürze angebracht ist und um eine parallel zur Fahrzeugquerachse verlaufende Schwenkachse aus einer in die untere Kontur des Heckdiffusors integrierten Ruheposition in eine mit seinem entgegen der Fahrtrichtung gesehen hinteren Abschnitt ausgeschwenkte, also von der ursprünglichen Kontur des Heckdiffusors nach unten weggeschwenkte Position verfahrbar ist.

Alle die vorgenannten Druckschriften befassen sich mit dem Vorsehen von Luftleiteinrichtungen oder Heckdiffusoren im unteren Bereich der Heckschürze eines Kraftfahrzeugs.

Die US 6,196,620 B1 offenbart ein Heckspoilersystem, welches aus einer quer über das Fahrzeugheck im unteren Bereich der Heckschürze verlaufenden und nach unten herausklappbaren Spoileranordnung sowie aus jeweils einem seitlichen, nach unten aus der Heckkontur herausklappbaren Spoileranordnung besteht. Diese gesamte Heckspoileranordnung bildet Leitvorrichtungen und Abrisskanten für die unter dem Fahrzeug entlangströmende Luftströmung. Es kann aber auch bei diesem Fahrzeug an den Fahrzeugseiten eine zur Wirbelbildung führende Ablösung der seitlichen Luftströmung auftreten.

Ferner sind aus der FR 2028674 A1 und der JP 2010-143522 A Kraftfahrzeuge mit einer entgegen der Fahrtrichtung verlagerbaren Luftleiteinrichtung bekannt, durch die in der Arbeitsposition der Luftleiteinrichtung eine Verlängerung der Kontur der Heckschürze erreicht wird.

### DARSTELLUNG DER ERFINDUNG

Aufgabe der vorliegenden Erfindung ist es, ein gattungsgemäßes Kraftfahrzeug so zu verbessern, dass eine optimale Umströmung des Fahrzeughecks auch bei höheren Geschwindigkeiten erreicht wird, und die entsprechenden Komponenten für ein solches Kraftfahrzeug bereitzustellen.

Der auf das Kraftfahrzeug gerichtete Teil der Aufgabe wird gelöst mit den Merkmalen des Patentanspruchs 1.

Dieses Kraftfahrzeug ist versehen mit einer Heckschürze, deren Kontur mittels einer Luftleiteinrichtung veränderbar ist, wobei die Luftleiteinrichtung zwischen einer an der Heckschürze anliegenden oder in die Kontur der Heckschürze integrierten Ruheposition und einer über die Kontur der Heckschürze hinaus ragenden Arbeitsposition mittels zumindest einer Antriebseinrichtung bewegbar ist. Erfindungsgemäß ist dabei vorgesehen, dass die Luftleiteinrichtung zumindest einen Basisabschnitt an der zur Fahrbahn gewandten Unterseite der Heckschürze und einen in Fahrtrichtung gesehen linken Seitenabschnitt sowie einen rechten Seitenabschnitt an der linken Seite beziehungsweise an der rechten Seite der Heckschürze aufweist, wobei die Seitenabschnitte mit dem zumindest einen Basisabschnitt verbunden sind, sodass in der Arbeitsposition eine U-förmige entgegen der Fahrtrichtung gerichtete Verlängerung der Kontur der Heckschürze gebildet ist. Erfindungsgemäß weist die zumindest eine Antriebseinrichtung eine Getriebevorrichtung auf, die so ausgebildet ist, dass bei einer Bewegung aus der Ruheposition in die Arbeitsposition zunächst die Seitenabschnitte von der Heckschürze weg bewegt werden und dass danach eine Bewegung der zumindest einen Luftleiteinrichtung nach hinten entgegen der Fahrtrichtung erfolgt.

### VORTEILE

Diese Ausgestaltung mit einer solchen Luftleiteinrichtung verbessert sehr wirksam die Aerodynamik des Kraftfahrzeug-Hecks, wobei eine deutliche Reduzierung der Wirbelbildung erreicht wird. Durch die an den Fahrzeugseiten hochgezogenen Seitenabschnitte wird auch hier eine energetisch günstigere Strömungsablösung bewirkt.

Weitere bevorzugte und vorteilhafte Ausgestaltungsmerkmale des erfindungsgemäßen Kraftfahrzeugs sind Gegenstand der Unteransprüche 2 bis 6.

Vorzugsweise ist die Luftleiteinrichtung im Bereich der Fahrzeug-Längsmittelebene geteilt ausgebildet und weist einen in Fahrtrichtung gesehen linken Luftleiteinrichtungsteil sowie einen in Fahrtrichtung gesehen rechten Luftleiteinrichtungsteil auf und der jeweilige Luftleiteinrichtungsteil weist einen unteren Basisabschnitt auf, der an seiner Außenseite in den zugeordneten Seitenabschnitt übergeht. Hierdurch entsteht eine geschlossene Kontur im Bereich des Übergangs vom unteren in den seitlichen Luftleiteinrichtungsteil. Die erfindungsgemäße Luftleiteinrichtung ist nicht auf eine einteilige oder zweiteilige Ausführung beschränkt; sie kann auch dreiteilig oder anderweitig mehrteilig ausgebildet sein. So kann zum Beispiel zwischen dem linken und dem rechten Luftleiteinrichtungsteil zumindest ein weiteres Luftleiteinrichtungsteil vorgesehen sein, das im Wesentlichen nur einen unteren Basisabschnitt und keinen hochgezogenen Seitenabschnitt aufweist und das von der zumindest einen Antriebseinrichtung in Fahrzeuglängsrichtung bewegbar ist.

Von Vorteil ist es auch, wenn dem jeweiligen Luftleiteinrichtungsteil eine eigenständige Antriebseinrichtung mit jeweils einer Getriebeeinrichtung zugeordnet ist.

Dabei ist die jeweilige Getriebeeinrichtung vorzugsweise so ausgebildet, dass der von ihr beaufschlagte Luftleiteinrichtungsteil eine Schwenkbewegung ausführt, bei der zunächst vorwiegend der Seitenabschnitt quer zur Fahrzeug-Längsmittelebene von der Heckschürze weg bewegt wird und bei der dann vorwiegend eine Bewegung des Luftleiteinrichtungsteils entgegen der Fahrtrichtung nach hinten erfolgt. Eine solche Schwenkbewegung besitzt gegenüber einer translatorischen Bewegung den Vorteil, dass die zugehörige Betätigungsmechanik weniger fehleranfällig ist, insbesondere da sie in einem Bereich des Fahrzeugs angeordnet ist, der besonders leicht verschmutzt.

Vorteilhaft ist es weiterhin, wenn die jeweiligen Luftleiteinrichtungsteile und die ihnen jeweils zugeordnete Getriebeeinrichtung so ausgebildet sind, dass der von ihr beaufschlagte Luftleiteinrichtungsteil gegen Ende der Schwenkbewegung wieder eine Bewegung zur Fahrzeug-Längsmittelebene hin vollführt so dass der Seitenabschnitt mit seiner in Fahrtrichtung vorderen Kante zumindest abschnittsweise in Anlage an die Heckschürze gerät. Hierdurch wird im vollständig ausgeschwenkten Zustand ein im Wesentlichen störungsfreier Übergang von der Fahrzeugaußenseite zum Seitenabschnitt des Luftleiteinrichtungsteils geschaffen.

Vorzugsweise sind die jeweiligen Luftleiteinrichtungsteile und die ihnen jeweils zugeordnete Getriebeeinrichtung so ausgebildet, dass der von ihr beaufschlagte Luftleiteinrichtungsteil gegen Ende der Schwenkbewegung wieder eine Bewegung zur Fahrzeug-Längsmittelebene hin vollführt so dass die beiden Luftleiteinrichtungsteile mit ihren zur Fahrzeug-Längsmittelebene weisenden Kanten in gegenseitige Anlage geraten. Dadurch wird im vollständig ausgeschwenkten Zustand der Luftleiteinrichtung auch eine geschlossene Kontur des unteren Abschnitts der Luftleiteinrichtung geschaffen.

Der Teil der Aufgabe, der auf die Bereitstellung einer Anordnung mit einer Luftleiteinrichtung, einer Heckschürze und zumindest einer Antriebseinrichtung, zur Verwendung in einem Kraftfahrzeug, gerichtet ist, wird gelöst durch die Merkmale des Patentanspruchs 7.

Diese erfindungsgemäße Anordnung zur Verwendung in einem Kraftfahrzeug weist zumindest einen unteren Basisabschnitt und jeweils einen mit dem Basisabschnitt verbundenen linken beziehungsweise rechten Seitenabschnitt auf, wobei die Seitenabschnitte mit dem zumindest einen Basisabschnitt derart verbunden sind, dass die Luftleiteinrichtung eine im Wesentlichen U-förmige Kontur aufweist.

Dabei ist es von Vorteil, wenn die Luftleiteinrichtung im Bereich ihrer Längsmittelebene geteilt ausgebildet ist und einen linken Luftleiteinrichtungsteil sowie einen rechten Luftleiteinrichtungsteil aufweist und wenn der jeweilige Luftleiteinrichtungsteil einen unteren Basisabschnitt aufweist, der an seiner Außenseite in den zugeordneten Seitenabschnitt übergeht.

Schließlich ist die Erfindung auch noch gerichtet auf eine Heckschürze für ein erfindungsgemäßes Kraftfahrzeug und/oder für eine erfindungsgemäße Anordnung.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:

### Hieran schließt sich Seite 8 der ursprünglich eingereichten Beschreibung an.

- Fig. 1: eine perspektivische Heckansicht eines erfindungsgemäßen Kraftfahrzeugs mit einer an der Heckschürze vorgesehene Luftleiteinrichtung in der Ruheposition;
- Fig. 2: die Heckschürze aus Fig. 1 mit der in eine Arbeitsposition verstellten Luftleiteinrichtung;
- Fig. 3A bis 3D: eine perspektivische Ansicht der Heckschürze aus den Fig. 1 und 2, gesehen in Richtung des Pfeils III in Fig. 2, mit einer in unterschiedlichen Phasen sequentiell verstellten Luftleiteinrichtung.

### DARSTELLUNG VON BEVORZUGTEN AUSFÜHRUNGSBEISPIELEN

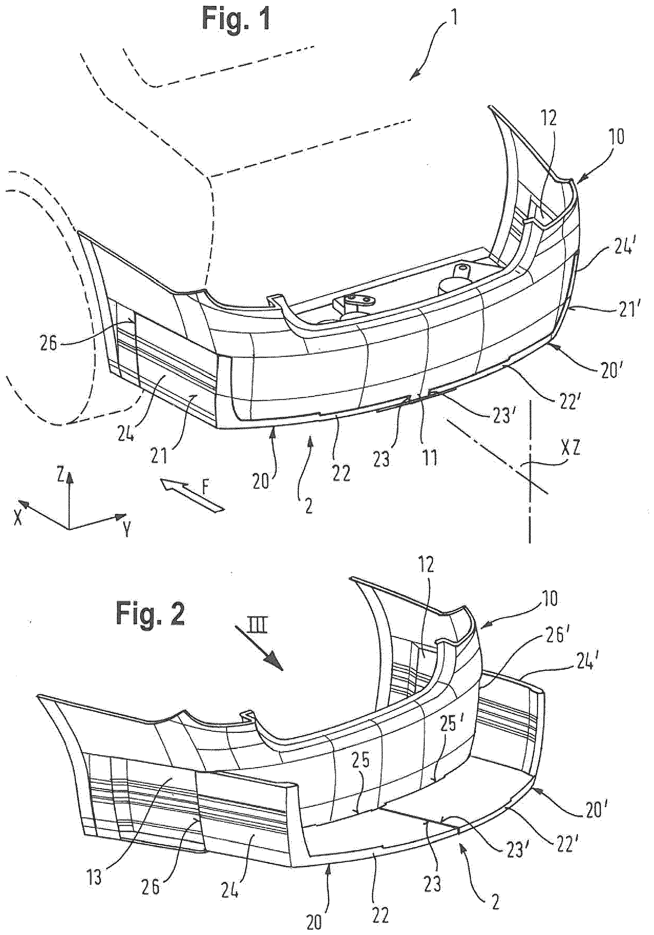

In Fig. 1 ist ein Kraftfahrzeug 1 mit einer Heckschürze 10 dargestellt, die im unteren Heckbereich des Kraftfahrzeugs 1 am Kraftfahrzeug 1 ausgebildet ist. Die Heckschürze 10 ist mit einer Luftleiteinrichtung 2 ausgestattet, die im gezeigten Beispiel, in Fahrtrichtung F gesehen, einen linken Luftleiteinrichtungsteil 20 sowie einen rechten Luftleiteinrichtungsteil 20' aufweist.

Jeder der beiden Luftleiteinrichtungsteile 20, 20' weist einen unteren Basisabschnitt 22, 22' auf, der im unteren Bereich der Heckschürze 10 vorgesehen ist. Der jeweilige Basisabschnitt 22, 22' geht an der Außenseite 21, 21' des betreffenden Luftleiteinrichtungsteils 20, 20' in einen Seitenabschnitt 24, 24' über, der sich vom Basisabschnitt 22, 22' entlang der Außenseite der Heckschürze 10 nach oben, also von der Fahrbahn weg, erstreckt.

Somit weist die Luftleiteinrichtung 2 eine im Wesentlichen parallel zur Fahrbahn verlaufende Basis mit zwei Basisabschnitten 22, 22' auf, die in der in Fig. 1 gezeigten Ruheposition an der zur Fahrbahn gewandten Unterseite der Heckschürze 10 an der Heckschürze 10 anliegt oder in die Außenkontur der Heckschürze 10 integriert ist, wie dies in Fig. 1 dargestellt ist. Der jeweilige linke Seitenabschnitt 24 und der rechte Seitenabschnitt 24' sind an der linken Außenseite beziehungsweise an der rechten Außenseite der Heckschürze 10 vorgesehen und liegen dort in der Ruheposition ebenfalls an der Heckschürze 10 an oder sind, wie in Fig. 1 gezeigt ist, in die Außenkontur der Heckschürze 10 integriert.

In der in Fig. 2 dargestellten Arbeitsposition der Luftleiteinrichtung 2 sind die Luftleiteinrichtungsteile 20, 20' vollständig nach hinten ausgefahren, so dass die Seitenabschnitte 24, 24' mit dem ihnen jeweils zugeordneten Basisabschnitt 22, 22' in dieser Arbeitsposition eine im Querschnitt (in einer YZ-Ebene) U-förmige und entgegen der Fahrtrichtung F gerichtete Verlängerung der unteren und seitlichen Kontur der Heckschürze 10 bilden.

In Fig. 1 ist zu erkennen, dass die beiden Basisabschnitte 22, 22' mit ihren zur Fahrzeug-Längsmittelebene XZ weisenden Kanten 23, 23' in der Ruheposition seitlich voneinander beabstandet sind und gegen einen unteren Mittelsteg 11 der Heckschürze 10 anliegen. In der in Fig. 2 dargestellten vollständig ausgefahrenen Arbeitsposition liegen die zur Fahrzeug-Längsmittelebene XZ weisenden inneren Kanten 23, 23' der Luftleiteinrichtungsteile 20, 20' aneinander an, so dass die beiden Luftleiteinrichtungsteile 20, 20' im ausgefahrenen Zustand der Arbeitsposition einen in Fahrtrichtung gesehen U-förmigen Querschnitt mit einer zusammenhängenden Basis bilden.

In dieser in Fig. 2 dargestellten Arbeitsposition liegt die in Fahrtrichtung F gesehen vordere Kante 25, 25' des jeweiligen Basisabschnitts 22, 22' an der Heckschürze 10 an. Auch die in Fahrtrichtung F gesehen vordere Kante 26, 26' des jeweiligen Seitenabschnitts 24, 24' liegt in der in Fig. 2 dargestellten Arbeitsposition an der Heckschürze 10 an.

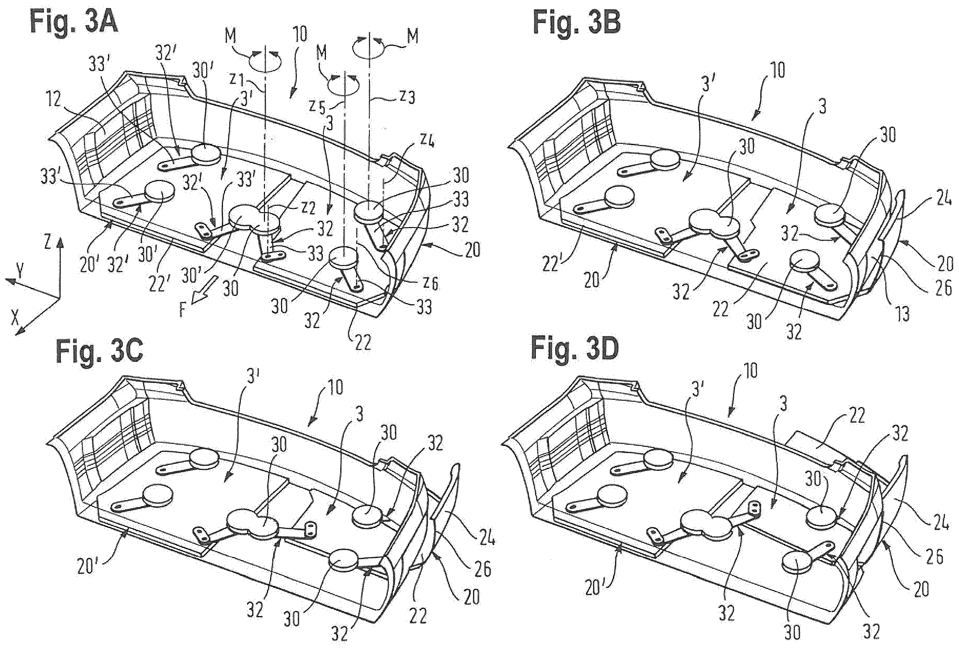

Der Aufbau des Antriebs für die Luftleiteinrichtungsteile 20, 20' und der Übergang von der in Fig. 1 gezeigten Ruheposition in die in Fig. 2 dargestellte Arbeitsposition werden nachstehend anhand der Fig. 3A bis 3D erläutert. Dabei zeigt die Fig. 3A die Ruheposition, die Fig. 3D die Arbeitsposition und die Fig. 3B und 3C zeigen zwei Zwischenpositionen. Zur Vereinfachung der Zeichnung ist jeweils immer nur der in Fahrtrichtung F linke Luftleiteinrichtungsteil 20 ausgefahren gezeigt; der rechte Luftleiteinrichtungsteil 20' ist stets in seiner Ruheposition dargestellt. In der Praxis erfolgen das Ausfahren und das Einfahren der beiden Luftleiteinrichtungsteile 20, 20' jedoch stets synchron. Zur Vereinfachung werden das Ausfahren und das Einfahren der Luftleiteinrichtung 2 daher nachstehend nur anhand des linken Luftleiteinrichtungsteils 20 beschrieben; das Aus- und Einfahren des rechten Luftleiteinrichtungsteils 20' erfolgt auf analoge Weise.

Jeder Luftleiteinrichtungsteil 20, 20' ist mit zumindest einer Antriebseinrichtung 3, 3' gekoppelt. Die jeweilige Antriebseinrichtung 3, 3' weist zumindest einen elektrisch, pneumatisch, magnetisch oder hydraulisch betätigten Aktuator 30, 30', zum Beispiel einen Antriebsmotor, und eine Getriebeeinrichtung 32, 32' auf, die vom zugeordneten Aktuator 30, 30' mit einer Dreh- oder Schwenkbewegung beaufschlagt wird. Es kann, wie in den Figuren schematisch dargestellt ist, jeder Getriebeeinrichtung ein Aktuator zugeordnet sein, es kann aber auch ein Aktuator mehrere Getriebeeinrichtungen beaufschlagen, die dann ein gemeinsames Antriebsgetriebe bilden. Obwohl im gezeigten Beispiel das Aus- und Einfahren der Luftleiteinrichtungsteile 20, 20' mittels einer Schwenkbewegung dargestellt und beschrieben ist, sind selbstverständlich auch translatorische Verfahrbewegungen von der Erfindung mit umfasst. Es kann auch eine einzige Antriebseinrichtung mit beispielsweise nur einem Aktuator vorgesehen sein, mit der alle Luftleiteinrichtungsteile betätigbar sind.

Jedem Luftleiteinrichtungsteil 20, 20' sind im gezeigten Beispiel drei Getriebeeinrichtungen 32, 32' zugeordnet. Die jeweilige Getriebeeinrichtung 32, 32' ist als Gelenkgetriebe ausgebildet, dessen Gelenkachsen z₁, z₂, z₃, z₄, z₅, z₆ im Wesentlichen parallel zur Fahrzeughochachse Z verlaufen. Das jeweilige Gelenkgetriebe weist einen Gelenkhebel 33, 33' auf, der einerseits an der Heckschürze 10 oder einem anderen fahrzeugfesten Teil schwenkbar gelagert ist und der andererseits mit dem Basisabschnitt 22, 22' des zugeordneten Luftleiteinrichtungsteils 20, 20' gelenkig verbunden ist. Der jeweilige fahrzeugfeste Aktuator 30, 30' wirkt auf den oder die ihm zugeordnete(n) Gelenkhebel 33, 33', um diese(n) zu verschwenken. Die Aktuatoren 30, 30' werden synchron betätigt, wie es in Fig. 3A durch die gebogenen Doppelpfeile M symbolisiert ist, so dass alle Gelenkhebel 33, 33' synchron verschwenkt werden.

In Fig. 3B ist diese Verschwenkung aus der in Fig. 3A gezeigten Ruheposition um einen Schwenkwinkel von ca. 20° erfolgt. Dadurch wurde der Seitenabschnitt 24 des linken Luftleiteinrichtungsteils 20 vorwiegend in Richtung der Fahrzeugquerachse Y und geringfügig in Richtung der Fahrzeuglängsachse X verlagert. Der Seitenabschnitt 24 hat sich dabei aus seiner Parkposition in einer von einer Seitentasche 12 der Heckschürze 10 gebildeten Ausnehmung 13 in der seitlichen Außenwand der Heckschürze 10 zur Seite heraus und geringfügig nach hinten entgegen der Fahrtrichtung F bewegt. Diese zuerst erfolgende vorwiegende Seitwärtsbewegung des Seitenabschnitts 24 bringt diesen sofort in eine von der Heckschürze 10 beabstandete Position, in der der anschließend nach hinten fahrende Seitenabschnitt 24 die Oberfläche der Heckschürze 10 nicht verkratzen kann, selbst wenn grober Schmutz an ihr anhaften sollte.

In der in Fig. 3C gezeigten Phase sind die Gelenkhebel 33 der jeweiligen Antriebseinrichtung 3 um ca. 80° gegenüber der Ruheposition verschwenkt worden, wobei der Seitenabschnitt 24 aus der in Fig. 3B gezeigten Position eine Bewegung vorwiegend in Fahrzeuglängsrichtung vollführt. Die seitwärts gerichtete Bewegung des Seitenabschnitts 24 kehrt sich in dieser Phase um und der Seitenabschnitt 24 bewegt sich im Anschluss an die in Fig. 3C gezeigte Position wieder auf die Heckschürze 10 zu bis er die in Fig. 3D gezeigte Endposition erreicht hat, in der die Vorderkante 26 des Seitenabschnitts 24 an der Außenseite der Heckschürze 10 anliegt. In der in Fig. 3D gezeigten Endstellung des Luftleiteinrichtungsteils 20, die der Arbeitsposition der Luftleiteinrichtung 2 entspricht, sind die Gelenkhebel 33 gegenüber der Ruheposition um 120° verschwenkt. Das Einfahren der Luftleiteinrichtung 2 erfolgt in umgekehrter Reihenfolge.

Mit der erfindungsgemäßen Luftleiteinrichtung 2 wird eine Heckschürze 10 eines Kraftfahrzeugs 1 geschaffen, die im Fahrbetrieb, insbesondere bei höheren Fahrgeschwindigkeiten, eine aerodynamisch wirksame und in sich geschlossene U-förmige Verlängerung der Kontur des Fahrzeughecks sowohl im Unterbodenbereich als auch an den Seiten des Fahrzeugs bewirkt. Um dies zu erreichen wird eine robuste Kinematiklösung beschrieben, die Schwenkbewegungen anstelle von translatorischen Bewegungen vollführt.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezuqszeichenliste

- 1: Kraftfahrzeug
- 2: Luftleiteinrichtung
- 3: Antriebseinrichtung
- 3': Antriebseinrichtung
- 10: Heckschürze
- 11: Mittelsteg
- 12: Seitentasche
- 13: Ausnehmung
- 20: linkes Luftleiteinrichtungsteil
- 20': rechtes Luftleiteinrichtungsteil
- 21: linke Außenseite
- 21': rechte Außenseite
- 22: linker Basisabschnitt
- 22': rechter Basisabschnitt
- 23: linke Kante
- 23': rechte Kante
- 24: linker Seitenabschnitt
- 24': rechter Seitenabschnitt
- 25: linke vordere Kante von 22
- 25': rechte vordere Kante von 22'
- 26: linke vordere Kante von 24
- 26': rechte vordere Kante von 24'
- 30: Aktuator
- 30': Aktuator
- 32: Getriebeeinrichtung
- 32': Getriebeeinrichtung
- 33: Gelenkhebel
- 33': Gelenkhebel
- F: Fahrtrichtung
- M: Antriebsrichtungen
- XZ: Fahrzeug-Längsmittelebene
- YZ: Querschnittsebene

## Patentansprüche

1. Kraftfahrzeug mit einer Heckschürze (10), deren Kontur mittels einer Luftleiteinrichtung (2) veränderbar ist, wobei die Luftleiteinrichtung (2) zwischen einer an der Heckschürze (10) anliegenden oder in die Kontur der Heckschürze (10) integrierten Ruheposition und einer über die Kontur der Heckschürze (10) hinaus ragenden Arbeitsposition mittels zumindest einer Antriebseinrichtung (3, 3') bewegbar ist, wobei die Luftleiteinrichtung (2) zumindest einen Basisabschnitt (22, 22') an der zur Fahrbahn gewandten Unterseite der Heckschürze (10) und einen in Fahrtrichtung gesehen linken Seitenabschnitt (24) sowie einen rechten Seitenabschnitt (24') an der linken Seite beziehungsweise an der rechten Seite der Heckschürze (10) aufweist, wobei die Seitenabschnitte (24, 24') mit dem zumindest einen Basisabschnitt (22, 22') verbunden sind, so dass in der Arbeitsposition eine U-förmige entgegen der Fahrtrichtung (F) gerichtete Verlängerung der Kontur der Heckschürze (10) gebildet ist,
**dadurch gekennzeichnet,**
**dass** die zumindest eine Antriebseinrichtung (3, 3') eine Getriebeeinrichtung (32, 32') aufweist, die so ausgebildet ist, dass bei einer Bewegung aus der Ruheposition in die Arbeitsposition zunächst die Seitenabschnitte (24, 24') von der Heckschürze (10) weg bewegt werden und dass danach eine Bewegung der zumindest einen Luftleiteinrichtung (2) nach hinten entgegen der Fahrtrichtung (F) erfolgt.

2. Kraftfahrzeug nach Anspruch 1,
**dadurch gekennzeichnet,**
**dass** die Luftleiteinrichtung (2) im Bereich der Fahrzeug-Längsmittelebene (XZ) geteilt ausgebildet ist und einen in Fahrtrichtung (F) gesehen linken Luftleiteinrichtungsteil (20) sowie einen rechten Luftleiteinrichtungsteil (20') aufweist und
**dass** der jeweilige Luftleiteinrichtungsteil (20, 20') einen unteren Basisabschnitt (22, 22') aufweist, der an seiner Außenseite (21, 21') in den zugeordneten Seitenabschnitt (24, 24') übergeht.

3. Kraftfahrzeug nach Anspruch 2,
**dadurch gekennzeichnet,**
**dass** dem jeweiligen Luftleiteinrichtungsteil (20, 20') eine eigenständige Antriebseinrichtung (3, 3') mit jeweils einer Getriebeeinrichtung (32, 32') zugeordnet ist.

4. Kraftfahrzeug nach Anspruch 3,
**dadurch gekennzeichnet,**
**dass** die jeweilige Getriebeeinrichtung (32, 32') so ausgebildet ist, dass der von ihr beaufschlagte Luftleiteinrichtungsteil (20, 20') eine Schwenkbewegung ausführt, bei der zunächst vorwiegend der Seitenabschnitt (24, 24') quer zur Fahrzeug-Längsmittelebene (XZ) von der Heckschürze (10) weg bewegt wird und bei der dann vorwiegend eine Bewegung des Luftleiteinrichtungsteils (20, 20') entgegen der Fahrtrichtung (F) nach hinten erfolgt.

5. Kraftfahrzeug nach Anspruch 4,
**dadurch gekennzeichnet,**
**dass** die jeweiligen Luftleiteinrichtungsteile (20, 20') und die ihnen jeweils zugeordnete Getriebeeinrichtung (32, 32') so ausgebildet sind, dass der von ihr beaufschlagte Luftleiteinrichtungsteil (20, 20') gegen Ende der Schwenkbewegung wieder eine Bewegung zur Fahrzeug-Längsmittelebene (XZ) hin vollführt so dass der Seitenabschnitt (24, 24') mit seiner in Fahrtrichtung (F) vorderen Kante (26, 26') zumindest abschnittsweise in Anlage an die Heckschürze (10) gerät.

6. Kraftfahrzeug nach Anspruch 4 oder 5,
**dadurch gekennzeichnet,**
**dass** die jeweiligen Luftleiteinrichtungsteile (20, 20') und die ihnen jeweils zugeordnete Getriebeeinrichtung (32, 32') so ausgebildet sind, dass der von ihr beaufschlagte Luftleiteinrichtungsteil (20, 20') gegen Ende der Schwenkbewegung wieder eine Bewegung zur Fahrzeug-Längsmittelebene (XZ) hin vollführt so dass die beiden Luftleiteinrichtungsteile (20, 20') mit ihren zur Fahrzeug-Längsmittelebene (XZ) weisenden Kanten (23, 23') in gegenseitige Anlage geraten.

7. Anordnung zur Verwendung in einem Kraftfahrzeug, wobei die Anordnung eine Luftleiteinrichtung (2), eine Heckschürze (10) und zumindest eine Antriebseinrichtung (3, 3') umfasst, wobei die Kontur der Heckschürze (10) mittels der Luftleiteinrichtung (2) veränderbar ist, wobei die Luftleiteinrichtung (2) zwischen einer an der Heckschürze (10) anliegenden oder in die Kontur der Heckschürze (10) integrierten Ruheposition und einer über die Kontur der Heckschürze (10) hinaus ragenden Arbeitsposition mittels der zumindest einen Antriebseinrichtung (3, 3') bewegbar ist, wobei die Luftleiteinrichtung (2) zumindest einen unteren Basisabschnitt (22, 22') und jeweils einen mit dem Basisabschnitt (22, 22') verbundenen linken beziehungsweise rechten Seitenabschnitt (24, 24') aufweist, wobei die Seitenabschnitte (24, 24') mit dem zumindest einen Basisabschnitt (22, 22') derart verbunden sind, dass die Luftleiteinrichtung (2) eine im Wesentlichen U-förmige Kontur aufweist, **dadurch gekennzeichnet, dass** die zumindest eine Antriebseinrichtung (3, 3') eine Getriebeeinrichtung (32, 32') aufweist, die so ausgebildet ist, dass bei einer Bewegung aus der Ruheposition in die Arbeitsposition zunächst die Seitenabschnitte (24, 24') von der Heckschürze (10) weg bewegt werden und dass danach eine Bewegung der zumindest einen Luftleiteinrichtung (2) nach hinten entgegen der Fahrtrichtung (F) erfolgt

8. Anordnung nach Anspruch 7,
**dadurch gekennzeichnet,**
**dass** die Luftleiteinrichtung (2) im Bereich ihrer Längsmittelebene (XZ) geteilt ausgebildet ist und einen linken Luftleiteinrichtungsteil (20) sowie einen rechten Luftleiteinrichtungsteil (20') aufweist und
**dass** der jeweilige Luftleiteinrichtungsteil (20, 20') einen unteren Basisabschnitt (22, 22') aufweist, der an seiner Außenseite (21, 21') in den zugeordneten Seitenabschnitt (24, 24') übergeht.

9. Heckschürze für ein Kraftfahrzeug nach einem der Ansprüche 1 bis 6 und/oder für eine Anordnung nach Anspruch 7 oder 8.

## Claims

1. Motor vehicle with a rear apron (10), the contour of which can be changed by means of an air-guiding device (2), wherein the air-guiding device (2) is movable by means of at least one drive device (3, 3') between an inoperative position lying on the rear apron (10) or integrated in the contour of the rear apron (10) and a working position protruding beyond the contour of the rear apron (10), wherein the air-guiding device (2) has at least one base portion (22, 22') on the lower side of the rear apron (10) facing the carriageway and a left side portion (24), as seen in the direction of travel, and a right side portion (24') on the left side and on the right side of the rear apron (10), wherein the side portions (24, 24') are connected to the at least one base portion (22, 22') such that, in the working position, a U-shaped extension of the contour of the rear apron (10) directed counter to the direction of travel (F) is formed,
**characterized**
**in that** the at least one drive device (3, 3') has a gear device (32, 32') which is designed in such a manner that, during a movement from the inoperative position into the working position, first of all the side portions (24, 24') are moved away from the rear apron (10), and in that subsequently a movement of the at least one air-guiding device (2) rearwards counter to the direction of travel (F) takes place.

2. Motor vehicle according to Claim 1,
**characterized**
**in that** the air-guiding device (2) is divided in the region of the vehicle longitudinal centre plane (XZ) and has a left air-guiding-device part (20), as seen in the direction of travel (F), and a right air-guiding-device part (20'), and
**in that** the respective air-guiding-device part (20, 20') has a lower base portion (22, 22') which merges on its outer side (21, 21') into the associated side portion (24, 24').

3. Motor vehicle according to Claim 2,
**characterized**
**in that** the respective air-guiding-device part (20, 20') is assigned an independent drive device (3, 3') in each case having a gear device (32, 32').

4. Motor vehicle according to Claim 3,
**characterized**
**in that** the respective gear device (32, 32') is designed in such a manner that the air-guiding-device part (20, 20') acted upon by the latter executes a pivoting movement in which first of all predominantly the side portion (24, 24') is moved away from the rear apron (10) transversely with respect to the vehicle longitudinal centre plane (XZ) and in which then predominantly a movement of the air-guiding-device part (20, 20') rearwards counter to the direction of travel (F) takes place.

5. Motor vehicle according to Claim 4,
**characterized**
**in that** the respective air-guiding-device parts (20, 20') and the gear device (32, 32') respectively assigned thereto are designed in such a manner that, towards the end of the pivoting movement, the air-guiding-device part (20, 20') acted upon by said gear device again undertakes a movement towards the vehicle longitudinal centre plane (XZ) such that the side portion (24, 24') by means of its front edge (26, 26') in the direction of travel (F) enters at least in portions into contact with the rear apron (10).

6. Motor vehicle according to Claim 4 or 5, **characterized**
**in that** the respective air-guiding-device parts (20, 20') and the gear device (32, 32') respectively assigned thereto are designed in such a manner that, towards the end of the pivoting movement, the air-guiding-device part (20, 20') acted upon by said gear device again undertakes a movement towards the vehicle longitudinal centre plane (XZ) such that the two air-guiding-device parts (20, 20') by means of their edges (23, 23') facing the vehicle longitudinal centre plane (XZ) enter into mutual contact.

7. Arrangement for use in a motor vehicle, wherein the arrangement comprises an air-guiding device (2), a rear apron (10) and at least one drive device (3, 3'), wherein the contour of the rear apron (10) can be changed by means of the air-guiding device (2), wherein the air-guiding device (2) is movable by means of the at least one drive device (3, 3') between an inoperative position lying on the rear apron (10) or integrated in the contour of the rear apron (10) and a working position protruding beyond the contour of the rear apron (10), wherein the air-guiding device (2) has at least one lower base portion (22, 22') and in each case a left and right side portion (24, 24') connected to the base portion (22, 22'), wherein the side portions (24, 24') are connected to the at least one base portion (22, 22') in such a manner that the air-guiding device (2) has a substantially U-shaped contour,
**characterized in that**
the at least one drive device (3, 3') has a gear device (32, 32') which is designed in such a manner that, during a movement from the inoperative position into the working position, first of all the side portions (24, 24') are moved away from the rear apron (10), and **in that** subsequently a movement of the at least one air-guiding device (2) rearwards counter to the direction of travel (F) takes place.

8. Arrangement according to Claim 7,
**characterized**
**in that** the air-guiding device (2) is divided in the region of its longitudinal centre plane (XZ) and has a left air-guiding-device part (20) and a right air-guiding-device part (20'), and
**in that** the respective air-guiding-device part (20, 20') has a lower base portion (22, 22') which merges on its outer side (21, 21') into the associated side portion (24, 24').

9. Rear apron for a motor vehicle according to one of Claims 1 to 6 and/or for an arrangement according to Claim 7 or 8.

## Revendications

1. Véhicule automobile comprenant une jupe arrière (10) dont le contour peut être modifié au moyen d'un dispositif de guidage d'air (2), le dispositif de guidage d'air (2) pouvant être déplacé au moyen d'au moins une unité d'entraînement (3, 3') entre une position de repos en appui sur la jupe arrière (10) ou intégrée dans le contour de la jupe arrière (10) et une position de travail en saillie du contour de la jupe arrière (10), le dispositif de guidage d'air (2) comportant au moins une portion de base (22, 22') sur le côté inférieur de la jupe arrière (10) qui est dirigé vers la chaussée et une portion latérale gauche (24), vue dans le sens de roulement, et une portion latérale droite (24') sur le côté gauche, respectivement sur le côté droit, de la jupe arrière (10), les portions latérales (24, 24') étant reliées à l'au moins une portion de base (22, 22') de sorte que, dans la position de travail, une extension en forme de U du contour de la jupe arrière (10) soit formée dont le sens est opposé au sens de déplacement (F), **caractérisé en ce que**
l'au moins un dispositif d'entraînement (3, 3') comporte un dispositif de transmission (32, 32') qui est conçu de telle sorte que, lors d'un déplacement de la position de repos à la position de travail, les portions latérales (24, 24') soient écartées de la jupe arrière (10) et que l'au moins un dispositif de guidage d'air (2) effectue ensuite un déplacement vers l'arrière dans le sens opposé au sens de roulement (F).

2. Véhicule automobile selon la revendication 1, **caractérisé en ce que**
le dispositif de guidage d'air (2) est conçu pour être divisé dans la zone du plan médian longitudinal (XZ) du véhicule et comporte une partie gauche (20), vue dans le sens de roulement (F) et une partie droite (20') et **en ce que**
la partie respective (20, 20') du dispositif de guidage d'air comporte une portion de base inférieure (22, 22') qui se transforme, sur son côté extérieur (21, 21'), en la portion latérale associée (24.24').

3. Véhicule automobile selon la revendication 2, **caractérisé en ce que**
la partie (20, 20') du dispositif de guidage d'air respective est associée à un dispositif d'entraînement indépendant (3, 3') pourvu à chaque fois d'un dispositif de transmission (32, 32').

4. Véhicule automobile selon la revendication 3, **caractérisé en ce que**
le dispositif de transmission respectif (32, 32') est conçu de telle sorte que la partie (20, 20') du dispositif de guidage d'air sur laquelle il agit exécute un mouvement de pivotement lors duquel la portion latérale (24, 24') est d'abord principalement écartée de la jupe arrière (10) transversalement au plan médian longitudinal (XZ) du véhicule et lors duquel la partie (20, 20') du dispositif de guidage d'air effectue principalement un mouvement dans le sens opposé au sens de roulement (F).

5. Véhicule automobile selon la revendication 4, **caractérisé en ce que**
les parties respectives (20, 20') du dispositif de guidage d'air et le dispositif de transmission (32, 32') qui est associé à chacune d'elles sont conçus de telle sorte que la partie (20, 20') du dispositif de guidage d'air sur laquelle ledit dispositif de transmission agit effectue à nouveau un mouvement en direction du plan médian longitudinal (XZ) du véhicule vers la fin du mouvement de pivotement de sorte que la portion latérale (24, 24') vienne en contact, avec son bord avant (26, 26') en référence au sens de roulement (F), au moins par portions avec la jupe arrière (10).

6. Véhicule automobile selon la revendication 4 ou 5, **caractérisé en ce que**
les parties respectives (20, 20') du dispositif de guidage d'air et le dispositif de transmission (32, 32') qui est associé à chacune d'elles sont conçus de telle sorte que la partie (20, 20') du dispositif de guidage d'air sur laquelle ledit dispositif de transmission agit effectue à nouveau un mouvement en direction du plan médian longitudinal (XZ) du véhicule vers la fin du mouvement de pivotement de telle sorte que les deux parties (20, 20') du dispositif de guidage d'air viennent en appui l'une sur l'autre au niveau de leurs bords (23, 23') dirigés vers le plan médian longitudinal (XZ) du véhicule.

7. Ensemble destiné à être utilisé dans un véhicule automobile, l'ensemble comprenant un dispositif de guidage d'air (2), une jupe arrière (10) et au moins un dispositif d'entraînement (3, 3'), le contour de la jupe arrière (10) pouvant être modifié au moyen du dispositif de guidage d'air (2), le dispositif de guidage d'air (2) pouvant être déplacé au moyen de l'au moins un dispositif d'entraînement (3, 3') entre une position de repos en appui sur la jupe arrière (10) ou intégrée dans le contour de la jupe arrière (10) et une position de travail saillant du contour de la jupe arrière (10), le dispositif de guidage d'air (2) comportant au moins une portion de base inférieure (22, 22') et pour chacune d'elles, une portion latérale gauche respectivement droite (24, 24') reliée à la portion de base (22, 22'), les portions latérales (24, 24') étant reliées à l'au moins une portion de base (22, 22') de telle sorte que le dispositif de guidage d'air (2) comporte un contour sensiblement en forme de U,
**caractérisé en ce que**
l'au moins un dispositif d'entraînement (3, 3') comporte un dispositif de transmission (32, 32') qui est conçu de telle sorte que, lors d'un mouvement de la position de repos à la position de travail, les portions latérales (24, 24') sont d'abord écartées de la jupe arrière (10), et **en ce que** l'au moins un dispositif de guidage d'air (2) effectue ensuite un mouvement vers l'arrière dans le sens opposé au sens de roulement (F).

8. Ensemble selon la revendication 7,
**caractérisé en ce que**
le dispositif de guidage d'air (2) est conçu pour être divisé dans la zone de son plan médian longitudinal (XZ) et comporte une partie gauche (20) et une partie droite (20') et **en ce que**
la partie respective (20, 20') du dispositif de guidage d'air comporte une portion de base inférieure (22, 22') qui se transforme, sur son côté extérieur (21, 21'), en la portion latérale associée (24.24').

9. Jupe arrière destinée à un véhicule automobile selon l'une des revendications 1 à 6 et/ou destinée à un ensemble selon la revendication 7 ou 8.
